# EUROPEAN PATENT SPECIFICATION

(11) **EP 4 181 300 B1**
(45) Date of publication and mention of the grant of the patent: **20.05.2026**
(21) Application number: 21951367.8
(22) Date of filing: 30.07.2021
(51) Int. Cl.: H01M 50/209, H01M 50/30, H01M 50/375, H01M 50/358, H01M 10/052, H01M 10/663, F16K 17/04, F16K 31/08

(54) **BATTERY BOX BODY, BATTERY, ELECTRIC DEVICE, AND BATTERY PREPARATION METHOD AND DEVICE**
BATTERIEKASTENKÖRPER, BATTERIE, ELEKTRISCHE VORRICHTUNG UND BATTERIEHERSTELLUNGSVERFAHREN UND -VORRICHTUNG
CORPS DE BOÎTIER DE BATTERIE, BATTERIE, DISPOSITIF ÉLECTRIQUE, ET PROCÉDÉ DE PRÉPARATION DE BATTERIE ET DISPOSITIF

(43) Date of publication of application: 17.05.2023
(73) Proprietor: Contemporary Amperex Technology (Hong Kong) Limited, Central, Central And Western District (HK)
(72) Inventor: ZENG, Zhimin, Ningde, Fujian 352100 (CN); YANG, Haiqi, Ningde, Fujian 352100 (CN); TANG, Yu, Ningde, Fujian 352100 (CN); HUANG, Xiaoteng, Ningde, Fujian 352100 (CN); WANG, Peng, Ningde, Fujian 352100 (CN)
(74) Representative: Rowlands, Stuart Michael
(86) International application number: PCT/CN2021/109700
(87) International publication number: WO 2023/004777

(56) References cited:
- WO-A1-2020/129491
- CN-A- 105 932 370
- CN-A- 108 360 234
- CN-A- 110 822 100
- CN-U- 206 754 509
- CN-U- 206 976 426
- CN-U- 207 896 244
- US-A1- 2017 106 718

## Description

### Technical Field

The present application relates to the technical field of batteries, and in particular to a case of a battery, the battery, a power consuming apparatus, and a method and apparatus for manufacturing the battery.

### Background Art

With the increasing environmental pollution, the new energy industry has attracted increased attention. In the new energy industry, battery technology is a key factor in its development.

In the development of the battery technology, the problem of safety is not negligible. If the safety of batteries cannot be guaranteed, the batteries cannot be used.

When the battery is in a high-temperature and high-humidity environment, it is easy to generate condensed liquid in a case of the battery, which will cause a potential safety hazard to affect the safety of the battery. Therefore, how to enhance the safety of batteries is an urgent technical problem to be solved in the battery technology.

CN207896244U relates to an electric automobile driving system's air cooling heat abstractor including: battery package and with the gas transmission pipeline of battery package UNICOM, gas transmission pipeline is last still to be provided with controllable formula solenoid valve, still be provided with one between controllable formula solenoid valve wraps with the battery and install the cooling conversion equipment on gas transmission pipeline, controllable formula solenoid valve still with temperature data collection controller line connection, and, wrap at the battery and still be provided with a waterproof ventilation valve.

WO2020/129491A1 relates to a current generation device electrically connected to a battery pack having a plurality of battery cells electrically connected to each other, and generates a ripple current. A temperature difference reduction unit reduces the temperature difference between battery cells to be heated by the ripple current, among the plurality of battery cells.

US2017/106718A1 relates to a vehicle including an air conditioning system, a high voltage equipment, a cooling fan, and an intake duct. The air conditioning system is to condition air in an interior of the vehicle which has a vehicle height direction. The cooling fan is to send cooling air which has passed through the air conditioning system to the high voltage equipment. The cooling fan has an intake port. The intake duct is connected to the intake port from upward in the vehicle height direction to supply the cooling air to the cooling fan. A lowermost part of the intake port in the vehicle height direction is positioned higher than a lowermost surface of a duct flow path of the intake duct in the vehicle height direction.

CN110822100A relates to a water valve comprising a valve shell, a first permanent magnet, an electromagnet and a control circuit module, wherein the first permanent magnet is arranged at one end of the valve shell; the electromagnet is arranged on a valve rod; the control circuit module is connected with the electromagnet; the valve rod can be movably arranged in the valve shell; and a valve platecapable of opening and closing a valve port is arranged on the valve rod.

CN105932370A relates to a thermal management system for a power battery, comprising a battery box body, wherein multiple battery modules are arranged in the battery box body; airbags are arranged between the multiple battery modules, and between the battery modules and the inner wall of the battery box body; a temperature sensor is arranged in the airbags; the airbags are connected with an air inlet pipe and an air exhausting pipe which are provided with a first control valve and a second control valve respectively; the air inlet pipe is connected with an air condition compressor; the temperature sensor is connected with the input end of a controller; and the air condition compressor, the first control valve and the second control valve are connected with the output end of the controller.

CN108360234A relates to an airing system which comprises a hanging unit, a sensor unit and a function unit, and the hanging unit is used for hanging a clothes hanger; the sensor unit is used for monitoring the hanging condition of the clothes hanger on the hanging unit and sends first signals, the function unit receives the first signals and makes predetermined feedback.

CN206976426U relates to a power battery box and power car forced air cooling system. The grounding case comprises a case body, installation current divider box in the box, current divider box includes roof, bottom plate and installs the roof with enclose the fender between the bottom plate, it is equipped with the second steam inlet to enclose to keepoff, install the intake pipe on the second steam inlet, this intake pipe one end intercommunication in the current divider box, the other end with set up in first air inlet on the box is connected, the roof with a plurality of air guide holes have been laid on the bottom plate respectively, the roof with be equipped with first battery installation cavity between the box, the bottom plate with beequipped with second battery installation cavity between the box

### Summary of the Invention

The present application provide a case of a battery, the battery, a power consuming apparatus, and a method and apparatus for manufacturing the battery, which can enhance the safety of the battery.

In a first aspect, a case of a battery is provided as set out in claim 1.

In the embodiment of the present application, the ventilation assembly is provided at the pressure balancing mechanisms of the case, and then the active circulation of the air in the case can be implemented, so that the high-temperature and high-humidity air in the case can be discharged to the outside of the case in a timely manner so as to prevent generation of a condensed liquid inside the case, thereby enhancing the safety of the battery. In addition, the ventilation assembly is provided on the pressure balancing mechanisms, so that the installation can be implemented based on an existing structure, and the assembly is convenient and quick.

In a possible implementation, the first ventilation assembly is configured to be connected to an air outlet of an air conditioner, and the second ventilation assembly is configured to be connected to an air inlet of the air conditioner, so that the air in the case enters an air flow circulation of the air conditioner.

The circulation inside the case is achieved by using the conditioned air, and then the high-temperature and high-humidity air inside the case is discharged to the outside of the case, thereby preventing generation of the condensed liquid so as to enhance the safety performance of the battery. While the battery is a battery in a vehicle, the air inside the case is circulated by means of the air conditioner in the vehicle without the use of an additional assembly.

In a possible implementation, the first pressure balancing mechanism and the second pressure balancing mechanism are respectively provided on two opposite walls of the case.

The first pressure balancing mechanism and the second pressure balancing mechanism are respectively provided on the opposite walls, and then after the air in the case is fully circulated, the high-temperature and high-humidity air in the case can be discharged out of the case, thereby preventing generation of the condensed liquid so as to enhance the safety performance of the battery.

In the claimed invention, the ventilation assembly comprises: a magnet for attracting a valve plate of the pressure balancing mechanism; a driving mechanism connected to the magnet and used to drive the magnet to move in a direction away from the case, so that the magnet attracts the valve plate of the pressure balancing mechanism in the direction away from the case to open the pressure balancing mechanism; and an air flow channel that is in communication with the inside of the case when the pressure balancing mechanism is opened.

In the embodiment of the present application, the valve plate is driven by the driving mechanism to open the pressure balancing mechanism, and then the active circulation of the air in the case can be implemented, so that the high-temperature and high-humidity air in the case can be discharged out of the case, thereby preventing generation of the condensed liquid so as to enhance the safety performance of the battery.

In a possible implementation, the driving mechanism is a rotary driving mechanism; when the driving mechanism rotates in a first direction, the driving mechanism drives the magnet to move in the direction away from the case; and when the driving mechanism rotates in a second direction, the driving mechanism drives the magnet to move in a direction close to the case. By means of the rotary driving mechanism, the active control on the circulation of the air inside the case can be achieved, achieving simple and convenient operation.

In a possible implementation, the ventilation assembly further comprises: a fixing structure configured to be connected to or separated from the pressure balancing mechanism in a direction parallel to the valve plate of the pressure balancing mechanism.

In the embodiment of the present application, the fixing structure is connected to or separated from the pressure balancing mechanism in the direction parallel to the valve plate, so that the valve plate will not be attracted during the connection or separation process, and it is also convenient for installation and removal.

In a possible implementation, the pressure balancing mechanism is provided with a groove corresponding to the fixing structure, and the fixing structure is snap-fitted into the groove in the direction parallel to the valve plate of the pressure balancing mechanism and then connected to the pressure balancing mechanism.

In the embodiment of the present application, the pressure balancing mechanism cooperates with the fixing structure of the ventilation assembly so as to fix the ventilation assembly, so that the installation and removal can be implemented on the basis of the existing structure and are more convenient and quicker.

In a possible implementation, the fixing structure is of a hollow semi-cylindrical shape adapted to the pressure balancing mechanism, so as to be able to be snap-fitted into the groove in the direction parallel to the valve plate of the pressure balancing mechanism. The hollow semi-cylindrical structure in the embodiment of the present application facilitates the installation and removal of the ventilation assembly.

In a possible implementation, when the fixing structure is connected to the pressure balancing mechanism, the driving mechanism moves relative to the fixing structure to drive the magnet to move in the direction away from the case to open the pressure balancing mechanism. The driving mechanism drives the magnet to move in the direction away from the case and then open the pressure balancing mechanism, so that the active circulation of the air in the case can be implemented, thereby preventing generation of the condensed liquid so as to enhance the safety performance of the battery.

In a possible implementation, the pressure balancing mechanism is a pressure relief mechanism that is used, when not connected to the ventilation assembly, to actuate to release the internal pressure of the case when the internal pressure reaches a threshold.

When the pressure relief mechanism in the embodiment of the present application is connected to the ventilation assembly, the active circulation of the air in the case can be implemented, so that the high-temperature and high-humidity air in the case is discharged out of the case so as to prevent generation of the condensed liquid; and when the pressure balancing mechanism is not connected to the ventilation assembly, the original pressure relief function can be restored so as to ensure the safety performance of the battery.

In a second aspect, a battery is provided. The battery comprises: battery cells; and a case according to the first aspect, wherein the battery cells are accommodated in the case.

In a third aspect, a power consuming apparatus is provided. The power consuming apparatus comprises: a battery according to the second aspect for supplying electric energy.

In a possible implementation, the power consuming apparatus further comprises an air conditioner, with an air outlet of the air conditioner being connected to the first ventilation assembly, and an air inlet of the air conditioner being connected to the second ventilation assembly.

In a fourth aspect, a method for manufacturing a battery is provided as set out in claim 13.

In a fifth aspect, an apparatus for manufacturing a battery is provided as set out in claim 14.

In the technical solution of the embodiment of present application, the ventilation assembly is provided at the pressure balancing mechanisms of the case, and then the active circulation of the air in the case can be implemented, so that the high-temperature and high-humidity air in the case can be discharged to the outside of the case in a timely manner so as to prevent generation of a condensed liquid inside the case, thereby enhancing the safety of the battery. In addition, the ventilation assembly is provided on the pressure balancing mechanisms, so that the installation can be implemented based on an existing structure, and the assembly is convenient and quick.

### Brief Description of the Drawings

In order to illustrate the technical solutions of the embodiments of the present application more clearly, the drawings required in the description of the embodiments of the present application will be described briefly below. Obviously, the drawings described below are merely some embodiments of the present application, and for those of ordinary skill in the art, other drawings can also be obtained from these drawings without any creative efforts.
Fig. 1 is a schematic diagram of a vehicle according to an embodiment of the present application;
Fig. 2 is a schematic diagram of a battery according to an embodiment of the present application;
Fig. 3 is a schematic diagram of a battery according to an embodiment of the present application;
Fig. 4 is a schematic diagram of a battery cell according to an embodiment of the present application;
Fig. 5 is a schematic diagram of a case of a battery according to an embodiment of the present application;
Fig. 6 is a top view corresponding to the case of a battery in Fig. 5;
Fig. 7 is a cross-sectional view corresponding to the case of a battery in Fig. 6 along A-A;
Fig. 8 is a schematic structural diagram of a pressure balancing mechanism suitable for use in an embodiment of the present application;
Fig. 9 is a partial detail view corresponding to position C in Fig. 7;
Fig. 10 is a schematic diagram of an air flow path inside a case according to an embodiment of the present application;
Fig. 11 is a schematic flow diagram of a method for manufacturing a battery according to an embodiment of the present application; and
Fig. 12 is a schematic block diagram of an apparatus for manufacturing a battery according to an embodiment of the present application.

In the drawings, the figures are not drawn to actual scale.

### Detailed Description of Embodiments

The implementations of the present application will be further described in detail below in conjunction with the accompanying drawings and embodiments. The following detailed description of the embodiments and the accompanying drawings are used to illustrate the principle of the present application by way of example, but should not be used to limit the scope of the present application, that is, the present application will not be limited to the described embodiments.

In the description of the present application, it should be noted that "a plurality of" means at least two, unless otherwise specified. The orientation or position relationship indicated by the terms "upper", "lower", "left", "right", "inner", "outer", etc. is only for the convenience of describing the present application and simplifying the description, rather than indicating or implying that the device or element referred to must have a particular orientation or be constructed and operated in a particular orientation, and therefore should not be construed as a limitation on the present application. In addition, the terms "first", "second", "third", etc. are used for descriptive purposes only, and should not be construed as indicating or implying the relative importance. The term "perpendicular" does not mean being perpendicular in the strict sense, but within an allowable range of errors. The term "parallel" does not mean being parallel in the strict sense, but within an allowable range of errors.

The orientation terms in the following description all indicate directions shown in the drawings, but do not limit the specific structure in the present application. In the description of the present application, it should also be noted that the terms "mounting", "connecting" and "connection" should be interpreted in a broad sense, unless explicitly specified and defined otherwise, which, for example, may be a fixed connection, a detachable connection or an integral connection, or may mean a direct connection, or an indirect connection by means of an intermediate medium. For those of ordinary skill in the art, the specific meaning of the terms mentioned above in the present application can be construed according to specific circumstances.

The term "and/or" in the present application is merely a description of the associated relationship of associated objects, representing that three relationships may exist, for example, A and/or B, may be expressed as: the three instances of A alone, both A and B, and B alone. In addition, the character "/" in the present application generally indicates that the associated objects before and after the character are in a relationship of "or".

In the present application, a battery cell may include a lithium ion secondary battery, a lithium ion primary battery, a lithium-sulfur battery, a sodium/lithium ion battery, a sodium ion battery or a magnesium ion battery, etc., which will not be limited in the embodiments of the present application. The battery cell may be cylindrical, flat, cuboid or in another shape, which will not be limited in the embodiments of the present application. The battery cells are generally classified into three types depending on the way of package: cylindrical battery cells, prismatic battery cells and pouch battery cells, which are also not limited in the embodiments of the present application.

A battery mentioned in the embodiments of the present application refers to a single physical module comprising one or more battery cells to provide a higher voltage and capacity. For example, the battery mentioned in the present application may comprise a battery pack, etc. The battery generally comprises a case for enclosing one or more battery cells. The case can prevent liquid or other foreign matters from affecting the charging or discharging of the battery cell.

The battery cell comprises an electrode assembly and an electrolytic solution, the electrode assembly being composed of a positive electrode plate, a negative electrode plate, and a separator. The battery cells operate mainly by means of metal ions moving between the positive electrode plate and the negative electrode plate. The positive electrode plate comprises a positive electrode current collector and a positive electrode active material layer, the positive electrode active material layer being covered on a surface of the positive electrode current collector, with the current collector not covered with the positive electrode active material layer protruding from the current collector covered with the positive electrode active material layer, and the current collector not covered with the positive electrode active material layer serving as a positive electrode tab. Taking a lithium ion battery as an example, the positive electrode current collector may be made of aluminum, and a positive electrode active material may be lithium cobalt oxide, lithium iron phosphate, ternary lithium, lithium manganate, etc. The negative electrode plate comprises a negative electrode current collector and a negative electrode active material layer, the negative electrode active material layer being covered on a surface of the negative electrode current collector, the current collector not covered with the negative electrode active material layer protruding from the current collector covered with the negative electrode active material layer, and the current collector not covered with the negative electrode active material layer serving as a negative electrode tab. The negative electrode current collector may be made of copper, and a negative electrode active material may be carbon, silicon, etc. In order to ensure that no fusing occurs when a large current passes, a plurality of positive electrode tabs are provided and are stacked together, and a plurality of negative electrode tabs are provided and are stacked together. The separator may be made of polypropylene (PP) or polyethylene (PE), etc. In addition, the electrode assembly may be of a wound structure or a laminated structure, which will not be limited in the embodiments of the present application.

The battery may comprise a plurality of battery cells in order to meet different power demands, with the plurality of battery cells being in series connection, parallel connection or series-parallel connection. The series-parallel connection refers to a combination of series and parallel connections. Optionally, the plurality of battery cells may be in series connection or in parallel connection or in series-parallel connection to constitute a battery module, and then a plurality of battery modules may in series connection or in parallel connection or in series-parallel connection to constitute the battery. That is to say, the plurality of battery cells may directly form a battery, or may form battery modules that may then form a battery. The battery is further provided in a power consuming apparatus to supply electric energy to the power consuming apparatus.

The development of battery technology needs to consider many design factors at the same time, such as energy density, cycle life, discharge capacity, charge-discharge rate, and other performance parameters, and also needs to consider the safety of the battery.

For battery cells, the main safety risk comes from the charging and discharging process, and thus a proper temperature design is also provided. In order to control the battery cells to be at a proper temperature, a cooling system may be provided in the battery. The cooling system is used to accommodate a cooling medium to cool the battery cells. The cooling system may also be referred to as a cooling component, a cooling plate, etc., and the cooling medium may also be referred to as a cooling fluid, and more specifically, may be referred to as a cooling liquid or a cooling air. The cooling fluid circulates to achieve a better temperature regulation effect. Optionally, the cooling medium may be water, a mixture of water and ethylene glycol, air, etc. If the cooling medium is water, the cooling system may also be referred to as a water cooling plate.

While the cooling system cools the battery cells in the case, it is easy to generate condensed liquid in the case of the battery, which will cause a potential safety hazard to affect the safety of the battery. Specifically, when the high-temperature and high-humidity air in the battery meets the cooling system in the case of the battery, condensed liquid may be generated and may affect the safety of the battery if it drips to electrical connection regions in the battery.

In view of this, the present application provides a technical solution in which the ventilation assembly is provided at the pressure balancing mechanisms of the case, and then the active circulation of the air in the case can be implemented, so that the high-temperature and high-humidity air in the case can be discharged to the outside of the case in a timely manner so as to prevent generation of a condensed liquid inside the case, thereby enhancing the safety of the battery. In addition, the ventilation assembly is provided on the pressure balancing mechanisms, so that the installation can be implemented based on an existing structure, and the assembly is convenient and quick.

The pressure balancing mechanism provided on the case of the battery may be used to balance the pressures inside and outside the case. For example, when the pressure inside the case is higher than the pressure outside the case, the air inside the case may flow out of the case by means of the pressure balancing mechanism; and when the pressure inside the case is lower than the pressure outside the case, the air outside the case may flow into the case by means of the pressure balancing mechanism. Optionally, the pressure balancing mechanism may be a pressure relief mechanism of the case, and the pressure relief mechanism is used to actuate to release the internal pressure of the case when the internal pressure reaches a threshold.

It should be understood that the pressure balancing mechanism in the embodiments of the present application may also be referred to as an explosion-proof valve or a balancing valve of the case, which will not be limited in the present application.

In the case of the battery, in addition to the battery cells and the cooling component mentioned above, a busbar component and other components of the battery may be provided. In some embodiments, a structure for fixing the battery cells may further be provided in the case. The case may be shaped depending on the plurality of battery cells accommodated. In some embodiments, the case may be square with six walls. Optionally, a bottom wall and a top wall of the case may be provided with cooling components integrated thereon to respectively cool the battery cells at the bottom and the top of the case. Each side wall of the case is provided with a beam comprising a plurality of sub-walls that form a hollow beam structure, i.e., the beam has a chamber inside. Optionally, in addition to the bottom and the top of the case, a cooling component may also be provided in the middle of the case to further enhance the cooling effect.

The busbar component is used to achieve the electrical connection, such as parallel connection, series connection, or series-parallel connection, between the plurality of battery cells. The busbar component may achieve the electrical connection between the battery cells by means of connecting electrode terminals of the battery cells. In some embodiments, the busbar component may be fixed to the electrode terminals of the battery cells by means of welding. The electrical connection formed by the busbar component may also be referred to as "high-voltage connection".

In addition to the busbar component, the battery may further be internally provided with a sensing device for sensing the state of the battery cells, for example, sensing the temperature, the state of charge, etc. of the battery cells. In the embodiments of the present application, the electrical connection region in the battery may comprise an electrical connection region formed by the busbar component and/or an electrical connection region in the sensing device.

The busbar component and the sensing device may be enclosed in an insulation layer to form a signal transmission assembly. Accordingly, the signal transmission assembly may be used for transmission of the voltage and/or sensing signals of the battery cells. The signal transmission assembly has no insulation layer at the connections with the electrode terminals of the battery cells, that is, the insulation layer has holes at the connections and is thus connected to the electrode terminals of the battery cells.

It should be understood that the components in the battery case described above should not be construed as a limitation on the embodiments of the present application, that is to say, the case for the battery of the embodiments of the present application may or may not comprise the components described above.

The technical solutions described in the embodiments of the present application are all applicable to various apparatuses using a battery, such as mobile phones, portable apparatuses, laptops, battery cars, electric toys, electric tools, electric vehicles, ships and spacecraft. For example, the spacecrafts include airplanes, rockets, space shuttles, space vehicles, etc.

It should be understood that the technical solutions described in the embodiments of the present application are not only applicable to the apparatuses described above, but also applicable to all apparatuses using a battery. However, for the sake of brevity of description, the following embodiments will be described taking an electric vehicle as an example.

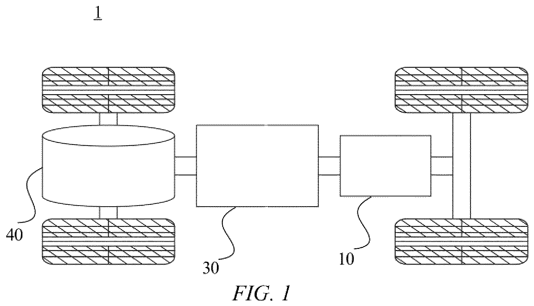

For example, Fig. 1 shows a schematic structural diagram of a vehicle 1 according to an embodiment of the present application. The vehicle 1 may be a fuel vehicle, a gas vehicle or a new-energy vehicle. The new-energy vehicle may be a battery electric vehicle, a hybrid vehicle, an extended-range vehicle, etc. The interior of the vehicle 1 may be provided with a motor 40, a controller 30 and a battery 10. The controller 30 is used to control the battery 10 to supply power to the motor 40. For example, the battery 10 may be provided at the bottom or the head or the tail of the vehicle 1. The battery 10 may be used to supply power to the vehicle 1. For example, the battery 10 can serve as a power source for operating the vehicle 1 for use in a circuit system of the vehicle 1, for example, to meet the working power demand of the vehicle 1 during startup, navigation and running. In another embodiment of the present application, the battery 10 can not only serve as a power source for operating the vehicle 1, but also serve as a power source for driving the vehicle 1, instead of or partially instead of fuel or natural air, to provide driving power for the vehicle 1.

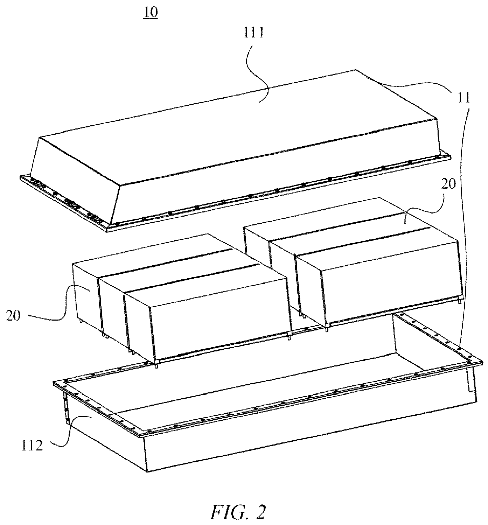

The battery 10 may comprise a plurality of battery cells in order to meet different power demands. For example, Fig. 2 shows a schematic structural diagram of a battery 10 according to an embodiment of the present application. The battery 10 may comprise a plurality of battery cells 20. The battery 10 may further comprise a case 11. The case 11 has a hollow structure inside, and the plurality of battery cells 10 are accommodated in the case 11. As shown in Fig. 2, the case 11 may comprise two portions, respectively referred to herein as a first portion 111 (an upper case) and a second portion 112 (a lower case). The first portion 111 and the second portion 112 are snap-fitted together. The first portion 111 and the second portion 112 may be shaped depending on the shape of a combination of the plurality of battery cells 20, and each of the first portion 111 and the second portion 112 has an opening. For example, the first portion 111 and the second portion 112 may both be a hollow cuboid and each have only one open face, an opening of the first portion 111 and an opening of the second portion 112 are disposed opposite to each other, and the first portion 111 and the second portion 112 are snap-fitted to each other to form the case 11 having an enclosed chamber. The plurality of battery cells 20 are combined in parallel connection or in series connection or in series-parallel connection, and then placed into the case 11 that is formed after the first portion 111 and the second portion 112 are snap-fitted together.

Optionally, the battery 10 may further comprise other structures, which will not be described in detail herein. For example, the battery 10 may further comprise a busbar component that are used to achieve electrical connection, such as parallel connection or series connection or series-parallel connection, between the plurality of battery cells 20. Specifically, the busbar component may achieve the electrical connection between the battery cells 20 by means of connecting electrode terminals of the battery cells 20. Further, the busbar component may be fixed to the electrode terminals of the battery cells 20 by means of welding. The electric energy of the plurality of battery cells 20 may be further extracted by means of an electrically conductive mechanism passing through the case 11. Optionally, the electrically conductive mechanism may also be a busbar component.

The number of the battery cells 20 may be set as any value depending on different power demands. The plurality of battery cells 20 may be in series connection, in parallel connection or in series-parallel connection to achieve higher capacity or power. Since each battery 10 may comprise a large number of the battery cells 20. For ease of mounting, the battery cells 20 may be provided in groups, and each group of battery cells 20 forms a battery module. The number of the battery cells 20 included in the battery module is not limited and may be set as required. The battery may comprise a plurality of battery modules that may be in series connection, in parallel connection or in series-parallel connection.

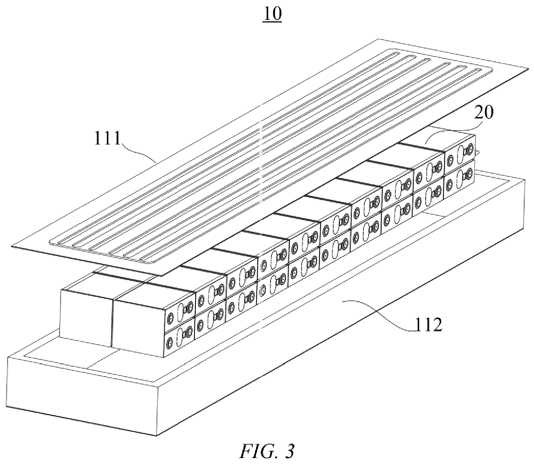

Optionally, as shown in Fig. 3, the first portion 111 of the case 11 may be an upper cover having no opening, i.e., the first portion 111 is a flat plate-shaped upper cover. The upper cover may be provided with a cooling component integrated thereon to cool the battery cells 20 at the top of the case 11. The second portion 112 of the case 11 is a chamber having an opening, and comprises a bottom wall and side walls. The bottom wall may be provided with a cooling component integrated thereon to cool the battery cells 20 at the bottom of the case 11. Each side wall may be provided with a beam comprising a plurality of sub-walls that form a hollow beam structure, i.e., the beam has a chamber inside.

Optionally, in addition to the bottom and top of the case 11, a cooling component may further be provided in the middle of the case 11. For example, a cooling component may also be provided between upper and lower rows of battery cells 20 to further enhance the cooling effect.

Optionally, the wall, provided with an electrode terminal, of the battery cell 20 in the case 11 may be perpendicular to the bottom wall of the case 11. That is to say, the battery cells 20 may be disposed horizontally ("lying flat"). In this way, a cooling component may be provided between every two rows of battery cells 20 in a direction perpendicular to the bottom wall of the case 11, and correspondingly, a cooling component may be provided on either of each battery cell 20. Optionally, the side wall having the largest area of each battery cell 20 is connected to a cooling component, thereby cooling the battery cells 20 to a greater extent.

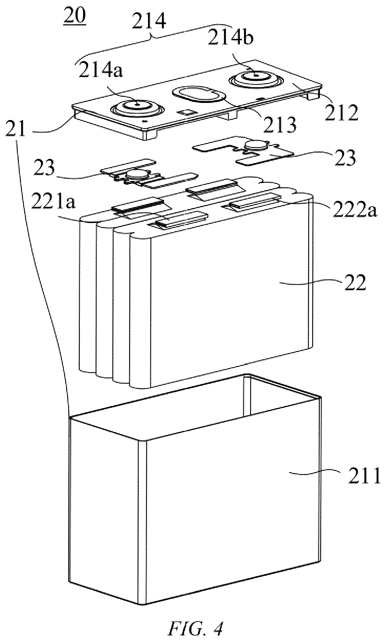

Fig. 4 shows a schematic structural diagram of a battery cell 20 according to an embodiment of the present application. The battery cell 20 comprises one or more electrode assemblies 22, a housing 211, and a cover plate 212. The housing 211 and the cover plate 212 form a shell or a battery box 21. Walls of the housing 211 and the cover plate 212 are both referred to as walls of the battery cell 20. For a cuboid battery cell 20, the walls of the housing 211 include a bottom wall and four side walls. The housing 211 may be determined depending on the shape of a combination of the one or more electrode assemblies 22, for example, the housing 211 may be a hollow cuboid, cube or cylinder, with one of the faces of the housing 211 having an opening such that the one or more electrode assemblies 22 can be disposed in the housing 211. For example, when the housing 211 is a hollow cuboid or cube, one of the flat faces of the housing 211 is an open face, that is, this flat face has no wall such that the inside of the housing 211 is in communication with the outside. When the housing 211 may be a hollow cylinder, an end face of the housing 211 is an open face, that is, this end face has no wall such that the inside of the housing 211 is in communication with the outside. The cover plate 212 covers the opening and is connected to the housing 211 to form an enclosed chamber in which the electrode assemblies 22 are disposed. The housing 211 is filled with an electrolyte, such as an electrolytic solution.

The battery cell 20 may further comprise two electrode terminals 214, and the two electrode terminals 214 may be provided on the cover plate 212. The cover plate 212 is generally in the form of a flat plate, the two electrode terminals 214 are fixed to a flat plate face of the cover plate 212, and the two electrode terminals 214 are respectively a positive electrode terminal 214a and a negative electrode terminal 214b. Each electrode terminal 214 is correspondingly provided with a connecting member 23 which, also referred to as a current collecting member 23, is located between the cover plate 212 and the electrode assembly 22 to achieve the electrical connection between the electrode assembly 22 and the electrode terminal 214.

As shown in Fig. 4, each electrode assembly 22 has a first tab 221a and a second tab 222a. The first tab 221a and the second tab 222a have opposite polarities. For example, when the first tab 221a is a positive electrode tab, the second tab 222a is a negative electrode tab. The first tab 221a of the one or more electrode assemblies 22 is connected to an electrode terminal by means of a connecting member 23, and the second tab 222a of the one or more electrode assemblies 22 is connected to another electrode terminal by means of another connecting member 23. For example, the positive electrode terminal 214a is connected to the positive electrode tab by means of a connecting member 23, and the negative electrode terminal 214b is connected to the negative electrode tab by means of another connecting member 23.

In the battery cell 20, according to the demands in actual use, one or more electrode assemblies 22 may be provided. As shown in Fig. 4, four independent electrode assemblies 22 are provided in the battery cell 20.

A pressure relief mechanism 213 may also be provided on the battery cell 20. The pressure relief mechanism 213 is used to be actuated, when the internal pressure or temperature of the battery cell 20 reaches a threshold, to release the internal pressure or temperature.

The pressure relief mechanism 213 may be of a variety of possible pressure relief structures, which will not be limited in the embodiments of the present application. For example, the pressure relief mechanism 213 may be a temperature-sensitive pressure relief mechanism that is configured to melt when the internal temperature of the battery cell 20 provided with the pressure relief mechanism 213 reaches a threshold; and/or the pressure relief mechanism 213 may be a pressure-sensitive pressure relief mechanism that is configured to fracture when the internal pressure of the battery cell 20 provided with the pressure relief mechanism 213 reaches a threshold.

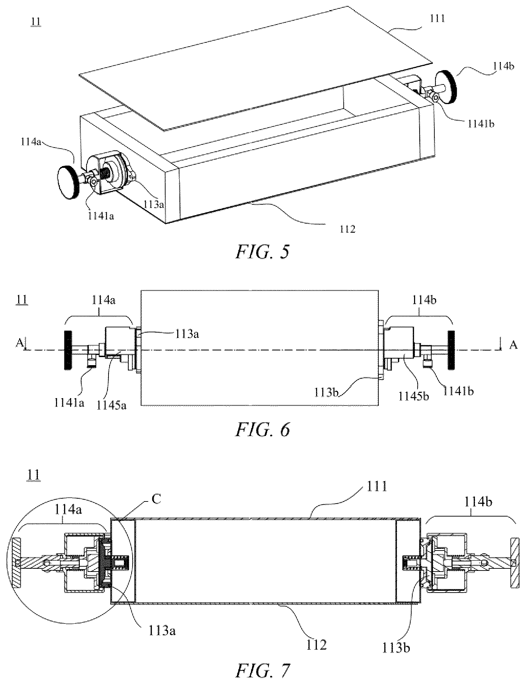

Fig. 5 shows a schematic structural diagram of a case 11 of a battery according to an embodiment of the present application. Fig. 6 shows a top view corresponding to the case 11 in Fig. 5, and Fig. 7 shows a cross-sectional view corresponding to the case 11 in Fig. 6 along A-A. As shown in Figs. 5 to 7, the case 11 may comprise an upper case 111, a lower case 112, a pressure balancing mechanism 113, and a ventilation assembly 114.

Specifically, the case 11 is provided with at least two pressure balancing mechanisms 113, the pressure balancing mechanisms 113 are used to balance the pressure inside and outside the case 11, and the at least two pressure balancing mechanisms 113 are connected to the ventilation assembly 114 at an outer side of the case 11, wherein a first ventilation assembly 114a connected to a first pressure balancing mechanism 113a in the at least two pressure balancing mechanisms 113 is used to open the first pressure balancing mechanism 113a to introduce air into the case 11, and a second ventilation assembly 114b connected to a second pressure balancing mechanism 113b in the at least two pressure balancing mechanisms 113 is used to open the second pressure balancing mechanism 113b so that the air in the case 11 is discharged.

The ventilation assembly 114 is connected to the at least two pressure balancing mechanisms 113 of the case 11 so as to introduce air into the case 11 by means of the ventilation assembly 114, which can achieve active control on the circulation of the air inside the case 11, and can also discharge the air in the case 11 to the outside of the case 11, thereby preventing generation of the condensed liquid to enhance the safety performance of the battery 10. In addition, the ventilation assembly 114 is connected to the pressure balancing mechanism 113, so that the installation can be implemented based on the existing structure, and the assembly is convenient and quick.

Optionally, as shown in Figs. 5 to 7, the first pressure balancing mechanism in the at least two pressure balancing mechanisms 113 may be the pressure balancing mechanism 113a, the second pressure balancing mechanism may be the pressure balancing mechanism 113b, the first ventilation assembly may be the ventilation assembly 114a, and the second ventilation assembly may be the ventilation assembly 114b; or the first pressure balancing mechanism may be the pressure balancing mechanism 113b, the second pressure balancing mechanism may be the pressure balancing mechanism 113a, the first ventilation assembly is the ventilation assembly 114b, and the second ventilation assembly is the ventilation assembly 114a, which will not be limited in the present application, as long as one of the ventilation assemblies 114 introduces air into the case 11 by means of one of the pressure balancing mechanisms 113, and the other ventilation assembly 114 discharges the air out of the case 11 by means of the other pressure balancing mechanism 113.

Optionally, the case 11 in the embodiment of the present application may also comprise a plurality of pressure balancing mechanisms 113 and corresponding ventilation assemblies 114, as long as some of the pressure balancing mechanisms 113 and the ventilation assemblies 114 are used to introduce the air into the case 11, and the other of the pressure balancing mechanisms 113 and the ventilation assemblies 114 discharge the air in the case 11 to the outside of the case 11, which will not be limited by the present application.

As an implementation, the air introduced into the case 11 in the embodiment of the present application may be the air in an air conditioner (not shown in the figure).

Specifically, the first ventilation assembly 114a is configured to be connected to an air outlet of the air conditioner, and the second ventilation assembly 114b is configured to be connected to an air inlet of the air conditioner, so that the air in the case 11 enters an air flow circulation of the air conditioner.

As shown in Fig. 6, the first ventilation assembly 114a and the second ventilation assembly 114b may be provided with a first interface 1141a and a second interface 1141b, respectively. Taking an example in which the first ventilation assembly 114a is connected to the air outlet of the air conditioner, and the second ventilation assembly 114b is connected to the air inlet of the air conditioner, the first interface 1141a can be configured to be connected to the air outlet of the air conditioner so that the air that is output from the air outlet of the air conditioner is introduced into the case 11, and the second interface 1141b is connected to the air inlet of the air conditioner so that the air inside the case 11 enters the air flow circulation of the air conditioner.

The active circulation of the air inside the case 11 is implemented by using the conditioned air, and then the high-temperature and high-humidity air inside the case 11 is discharged to the outside of the case 11, thereby preventing generation of the condensed liquid so as to enhance the safety performance of the battery 10. While the battery 10 is a battery in a vehicle, the circulation inside the case 11 is implemented by using an air conditioner in the vehicle without the use of an additional assembly.

As an implementation, the first pressure balancing mechanism 113a and the second pressure balancing mechanism 113b in the embodiment of the present application are respectively provided on two opposite walls of the case 11.

The first pressure balancing mechanism 113a and the second pressure balancing mechanism 113b are respectively provided on opposite walls, and then after the air in the case 11 can be fully circulated, the high-temperature and high-humidity air in the case 11 can be discharged out of the case 11, thereby preventing generation of the condensed liquid so as to enhance the safety performance of the battery 10.

Optionally, the first pressure balancing mechanism 113a and the second pressure balancing mechanism 113b may be provided on two walls of the case 11 that are joined together, or may be provided on the same wall, which will not be limited in the embodiment of the present application.

The ventilation assembly 114 in the present invention comprises a magnet 1142 for attracting a valve plate 1131 of the pressure balancing mechanism 113; a driving mechanism 1143 connected to the magnet 1142, the driving mechanism 1143 being used to drive the magnet 1142 to move in a direction away from the case 11, so that the magnet 1142 attracts the valve plate 1131 of the pressure balancing mechanism 113 in the direction away from the case 11 to open the pressure balancing mechanism 113; and an air flow channel 1144, the air flow channel 1144 being in communication with the inside of the case 11 when the pressure balancing mechanism 113 is opened.

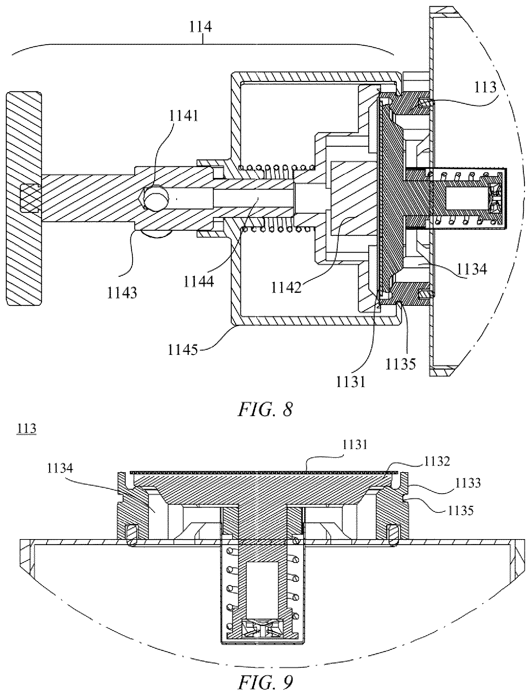

Specifically, Fig. 8 shows a partial detail view corresponding to position C in Fig. 7. As shown in Fig. 8, this detail view comprises a pressure balancing mechanism 113 and a ventilation assembly 114.

It should be understood that although the details shown in Fig. 8 correspond to the part in Fig. 7 of the first ventilation assembly 114a and the first pressure balancing mechanism 113a, and for brevity, Fig. 8 does not describe a particular set of ventilation assembly and pressure balancing mechanism, that is, all the pressure balancing mechanisms and ventilation assemblies in the embodiments of the present application may be adapted to use the specific structure in Fig. 8.

As shown in Fig. 8, the ventilation assembly 114 comprises a magnet 1142, a driving mechanism 1143, and an air flow channel 1144.

Optionally, the ventilation assembly 114 may further comprise other components, such as a spring, which will not be limited in the embodiments of the present application.

Specifically, when the air inside the case 11 needs to be discharged, the magnet 1142 can be driven by the driving mechanism 1143 to move in the direction away from the case 11. Since the magnet 1142 is attracted on the valve plate 1131, the pressure balancing mechanism 113 can be driven by the driving mechanism 1143 to open, so that the air flow channel 1144 in the ventilation assembly 114 is in communication with an air flow channel 1134 in the pressure balancing mechanism 113, and at the same time, the interface 1141 on the ventilation assembly 114 can be connected to the air inlet or the air outlet of the air conditioner. In this way, the conditioned air may pass through the air flow channel 1144 in the ventilation assembly 114 and the air flow channel 1134 in the pressure balancing mechanism 113 and then enter the inside of the case 11, or may be discharged from the inside of the case 11.

As an implementation, the pressure balancing mechanism 113 in the embodiment of the present application may be a pressure relief mechanism that is used, when not connected to a ventilation assembly 114, to actuate to release the internal pressure of the case 11 when the internal pressure reaches a threshold.

When the pressure balancing mechanism 113 in the embodiment of the present application is connected to the ventilation assembly 114, the active circulation of the air in the case 11 can be implemented, so that the high-temperature and high-humidity air in the case 11 can be discharged out of the case 11, thereby preventing generation of the condensed liquid; and when the pressure balancing mechanism is not connected to the ventilation assembly 114, the original pressure relief function can be restored to ensure the safety performance of the battery 10.

Fig. 9 shows a schematic structural diagram of a pressure balancing mechanism suitable for use in the embodiment of the present application.

As shown in Fig. 9, the pressure balancing mechanism 113 may comprise a valve plate 1131, a valve cover 1132, a valve body 1133, and an air flow channel 1134.

In the figure, the valve plate 1131 and the valve cover 1132 may be connected together, and thus when the driving mechanism 1143 drives the valve plate 1133, the valve cover 1132 can be driven together, so that the pressure balancing mechanism 113 can be opened, and then the air can enter the case 11 by means of the ventilation assembly 113 or be discharged from inside the case 11.

Optionally, the valve plate 1131 and the valve cover 1132 may be integrated, or may be separately provided, as long as the driving mechanism 1143 can open the pressure balancing mechanism 113 when driving the valve plate 1131.

Optionally, the pressure balancing mechanism 113 may further comprise other components, such as a spring, which will not be limited in the embodiments of the present application.

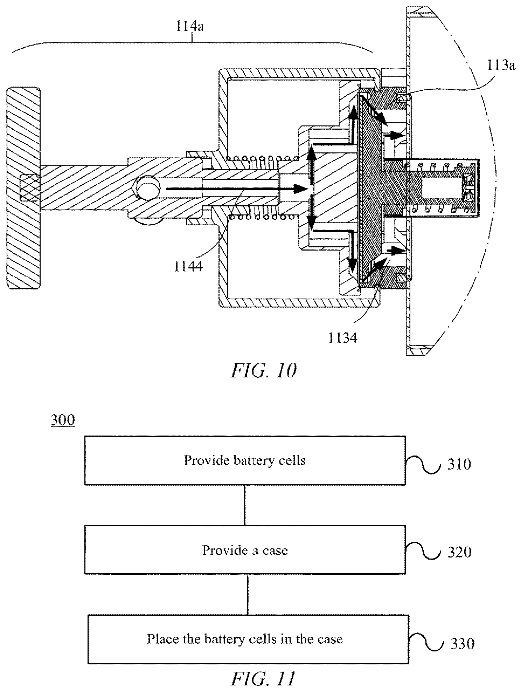

Fig. 10 shows a schematic diagram of an air flow path inside the case according to an embodiment of the present application. As shown in Fig. 10, the conditioned air can enter the air flow channel 1144 from the interface 1141, and then pass through the air flow channel 1134 in the pressure balancing mechanism 113 and enter the inside of the case 11 in the direction indicated by arrows in the air flow channel 1144 in Fig. 10.

Similarly, the air in the case 11 can also pass through the air flow channel 1134 in the pressure balancing mechanism 113 on the other side, enter the air flow channel 1144 in the ventilation assembly 114, and then be discharged out of the case 11 and enter the air circulation of the air conditioner through the air inlet of the air conditioner. It should be understood that, under the circumstances, the air flow direction may be opposite to that shown in Fig. 10.

As an implementation, the driving mechanism 1143 in the embodiment of the present application can rotate, so as to drive the magnet 1142 to move in the direction away from the case 11 or close to the case 11.

Specifically, the driving mechanism 1143 is a rotary driving mechanism. When the driving mechanism 1143 rotates in a first direction, the driving mechanism 1143 drives the magnet 1142 to move in the direction away from the case 11; and when the driving mechanism 1143 rotates in a second direction, the driving mechanism 1143 drives the magnet 1142 to move in the direction close to the case 11.

Optionally, the first direction in the present application may be, for example, a counter-clockwise direction or a clockwise direction, and correspondingly, the second direction may be a clockwise direction or a counter-clockwise direction; or the first direction and the second direction may also be other directions, which will not be limited in this embodiment of the present application.

Optionally, by the way of providing threads in the driving mechanism 1143, the driving mechanism 1143 can rotate in different directions, and the specific way of providing threads will not be limited in the embodiment of the present application.

Alternatively, optionally, the driving mechanism 1143 can also be directly lifted in the direction away from the case 11, so that the magnet 1142 can drive the valve plate 1131 so as to open the pressure balancing mechanism 113, and the specific implementation will not be limited in the embodiment of the present application.

As an implementation, the ventilation assembly 114 in the embodiment of the present application further comprises a fixing structure, such as a fixing structure 1145 in Fig. 8, and the ventilation assembly 114 can be fixed on the pressure balancing mechanism 113 by means of the fixing structure 1145.

Specifically, the ventilation assembly 114 further comprises a fixing structure 1145 that configured to be connected to or separated from the pressure balancing mechanism 113 in a direction parallel to the valve plate 1131 of the pressure balancing mechanism 113.

The fixing structure 1145 is connected to or separated from the pressure balancing mechanism 113 in the direction parallel to the valve plate 1131, so that the valve plate 1131 will not be attracted during the connection or separation process, and it is also convenient for installation and removal.

As an implementation, the pressure balancing mechanism 113 in the embodiment of the present application may be provided with a groove, such as a groove 1135 in Figs. 8 and 9, and the groove 1135 cooperates with the fixing structure 1145 to fix the ventilation assembly 114.

Specifically, the pressure balancing mechanism 113 is provided with a groove 1135 corresponding to the fixing structure 1145, and the fixing structure 1145 is snap-fitted into the groove 1135 in the direction parallel to the valve plate 1131 of the pressure balancing mechanism 113 and then connected to the pressure balancing mechanism 113.

By means of the cooperation between the groove 1135 and the fixing structure 1145, the ventilation assembly 114 can be installed and removed conveniently.

It should be understood that when the air in the case 11 needs to be circulated so that the high-temperature and high-humidity air therein is discharged, the ventilation assembly 114 in the embodiment of the present application can be fixed on the pressure balancing mechanism 113 by means of the fixing structure 1145 so as to achieve the air circulation function mentioned above. However, when the air in the case 11 does not need to be circulated, the ventilation assembly 114 can be removed from the pressure balancing mechanism 113. It can be known from the description of the previous embodiment that after the ventilation assembly 114 in the embodiment of the present application is detached from the pressure balancing mechanism 113, the normal use of the pressure balancing mechanism 113 will not be affected at all, and the pressure balancing mechanism 113 can still release the internal pressure when the internal pressure of the case 11 reaches a threshold.

Optionally, a washer may be further provided at the groove 1135 to further enhance the connection performance.

As an implementation, in order to facilitate the installation or removal of the ventilation assembly 114 on or from the pressure balancing mechanism 113, the fixing structure 1145 may be a hollow semi-cylindrical structure. Specifically, the fixing structure 1145 is of a hollow semi-cylindrical shape adapted to the pressure balancing mechanism 113 and thus can be snap-fitted into the groove 1135 in the direction parallel to the valve plate 1131 of the pressure balancing mechanism 113.

By means of providing the fixing structure 1145 of a hollow semi-cylindrical shape, it is possible to ensure that the fixing structure 1145 can be easily fitted with the groove 1135 on the pressure balancing mechanism 113, thereby facilitating installation and removal.

Optionally, the fixing structure 1145 in the embodiment of the present application may also have other shapes, such as a hollow semi-cuboid shape, which will not be limited in the embodiment of the present application.

As an implementation, when the fixing structure 1145 is connected to the pressure balancing mechanism 113, the driving mechanism 1143 moves relative to the fixing structure 1145 to drive the magnet 1142 to move in the direction away from the case 11 to open the pressure balancing mechanism 113.

It should be understood that the ventilation assembly 114 can be fixed to the pressure balancing mechanism 113 by means of the fixing structure 1145, and during the movement of the driving mechanism 1143, the fixing structure 1145 remains stationary, so that the driving mechanism 1143 can move away from the case 11 so as to drive the valve plate 1131 to open the pressure balancing mechanism 113.

One embodiment of the present application provides a battery 10. The battery 10 may comprise battery cells 20, and a case 11 in the foregoing embodiments, the battery cells 20 being accommodated in the case 11.

The battery cell 20 may be the battery cell 20 described in the foregoing embodiments. For example, the battery cell 20 may be the battery cell 20 in Fig. 4.

The battery 10 may further comprise a busbar component that is used to achieve electrical connection between the plurality of battery cells 20. The battery 10 may further comprise a sensing device for sensing a state of the battery cells 20.

Optionally, the wall of the battery cell 20 that is provided with an electrode terminal may be perpendicular to the bottom wall of the case 11. That is to say, the battery cells 20 may be disposed horizontally ("lying flat"). Optionally, the side wall of the battery cell 20 having the largest area is connected to a cooling component, thereby cooling the battery cell 20 to a greater extent.

Reference may be made to the foregoing embodiments for the specific description of the components in the battery 10, which will not be repeated herein for brevity.

An embodiment of the present application further provides a power consuming apparatus that may comprise a battery 10 according to the foregoing embodiments, the battery 10 being used for supplying electric energy to the power consuming apparatus.

As an implementation, the power consuming apparatus further comprises an air conditioner, with an air outlet of the air conditioner being connected to the first ventilation assembly 114a, and an air inlet of the air conditioner being connected to the second ventilation assembly 114b.

The case 11 of a battery, the battery 10, and the power consuming apparatus according to the embodiments of the present application are described above, and a method and apparatus for manufacturing a battery according to the embodiments of the present application will be described below. For the parts not described in detail, reference can be made to the foregoing embodiments.

Fig. 11 shows a schematic flow diagram of a method 300 for manufacturing a battery according to an embodiment of the present application. As shown in Fig. 11, the method 300 may comprise the following steps.

In step 310, battery cells 20 are provided.

In step 320, a case 11 is provided. The case 11 is provided with at least two pressure balancing mechanisms 113, the pressure balancing mechanisms 113 being used to balance the pressure inside and outside the case 11, and the at least two pressure balancing mechanisms 113 being connected to a ventilation assembly 114 at an outer side of the case 11.

In step 330, the battery cells 20 is placed into the case 11.

wherein a first ventilation assembly 114a connected to a first pressure balancing mechanism 113a in the at least two pressure balancing mechanisms 113 is used to open the first pressure balancing mechanism 113a to introduce air into the case 11, and a second ventilation assembly 114b connected to a second pressure balancing mechanism 113b in the at least two pressure balancing mechanisms 113 is used to open the second pressure balancing mechanism 113b so that the air in the case 11 is discharged.

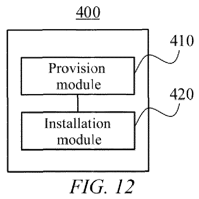

Fig. 12 shows a schematic block diagram of an apparatus 400 for manufacturing a battery according to an embodiment of the present application. As shown in Fig. 12, the apparatus 400 for manufacturing a battery may comprise a provision module 410 and an installation module 420.

The provision module 410 is used to provide battery cells 20 and a case 11, the case 11 being provided with at least two pressure balancing mechanisms 113, the pressure balancing mechanisms 113 being used to balance the pressure inside and outside the case 11, and the at least two pressure balancing mechanisms 113 being connected to a ventilation assembly 114 at an outside of the case 11.

The installation module 420 is used to place the battery cells 20 into the case 11.

wherein a first ventilation assembly 114a connected to a first pressure balancing mechanism 113a in the at least two pressure balancing mechanisms 113 is used to open the first pressure balancing mechanism 113a to introduce air into the case 11, and a second ventilation assembly 114b connected to a second pressure balancing mechanism 113b in the at least two pressure balancing mechanisms 113 is used to open the second pressure balancing mechanism 113b so that the air in the case 11 is discharged.

While the present application has been described with reference to the preferred embodiments, various modifications can be made and equivalents can be provided to substitute for the components thereof without departing from the scope of the present application. In particular, the technical features mentioned in the embodiments can be combined in any manner, as long as there is no structural conflict. The present application is not limited to the specific embodiments disclosed herein, but includes all the technical solutions that fall within the scope of the claims.

## Claims

1. A case (11) of a battery, wherein the case (11) is provided with at least two pressure balancing mechanisms (113), the pressure balancing mechanisms (113) being used to balance the pressure inside and outside the case (11), and the at least two pressure balancing mechanisms (113) being connected to a ventilation assembly (114) at an outer side of the case (11),
wherein a first ventilation assembly (114a) connected to a first pressure balancing mechanism (113a) in the at least two pressure balancing mechanisms (113) is used to open the first pressure balancing mechanism (113a) to introduce air into the case (11), and a second ventilation assembly (114b) connected to a second pressure balancing mechanism (113b) in the at least two pressure balancing mechanisms (113) is used to open the second pressure balancing mechanism (113b) so that the air in the case (11) is discharged, the case being **characterized in that** the ventilation assembly (114) comprises:
a magnet (1142) for attracting a valve plate (1131) of the pressure balancing mechanism (113);
a driving mechanism (1143) connected to the magnet (1142), the driving mechanism (1143) being used to drive the magnet (1142) to move in a direction away from the case (11), so that the magnet (1142) attracts the valve plate (1131) of the pressure balancing mechanism in the direction away from the case (11) to open the pressure balancing mechanism (113); and
an air flow channel (1144), the air flow channel (1144) being in communication with the inside of the case (11) when the pressure balancing mechanism (113) is opened.

2. The case (11) according to claim 1, wherein the first ventilation assembly (114a) is configured to be connected to an air outlet of an air conditioner, and the second ventilation assembly (114b) is configured to be connected to an air inlet of the air conditioner, so that the air in the case (11) enters an air flow circulation of the air conditioner.

3. The case (11) according to claim 1 or 2, whereinthe first pressure balancing mechanism (113a) and the second pressure balancing mechanism (113b) are respectively provided on two opposite walls of the case (11).

4. The case (11) according to claim 1, wherein the driving mechanism (1143) is a rotary driving mechanism; when the driving mechanism (1143) rotates in a first direction, the driving mechanism (1143) drives the magnet (1142) to move in the direction away from the case (11); and when the driving mechanism (1143) rotates in a second direction, the driving mechanism (1143) drives the magnet (1142) to move in a direction close to the case (11).

5. The case (11) according to any preceeding claim, wherein the ventilation assembly (114) further comprises:
a fixing structure (1145) configured to be connected to or separated from the pressure balancing mechanism (113) in a direction parallel to the valve plate (1131) of the pressure balancing mechanism (113).

6. The case (11) according to claim 5, wherein the pressure balancing mechanism (113) is provided with a groove (1135) corresponding to the fixing structure (1145), and the fixing structure (1145) is snap-fitted into the groove (1135) in the direction parallel to the valve plate (1131) of the pressure balancing mechanism (113) and then connected to the pressure balancing mechanism (113).

7. The case (11) according to claim 6, wherein the fixing structure (1145) is of a hollow semi-cylindrical shape adapted to the pressure balancing mechanism (113) so as to be able to be snap-fitted into the groove (1135) in the direction parallel to the valve plate (1131) of the pressure balancing mechanism (113).

8. The case (11) according to any one of claims 5 to 7, wherein when the fixing structure (1145) is connected to the pressure balancing mechanism (113), the driving mechanism (1143) moves relative to the fixing structure (1145) to drive the magnet (1142) to move in the direction away from the case (11) to open the pressure balancing mechanism (113).

9. The case (11) according to any one of claims 1 to 8, **characterized in that** the pressure balancing mechanism (113) is a pressure relief mechanism that is used, when not connected to the ventilation assembly (114), to actuate to release the internal pressure of the case (11) when the internal pressure reaches a threshold.

10. A battery, **characterized by** comprising:
battery cells; and
a case (11) according to any one of claims 1 to 9, wherein the battery cells are accommodated in the case (11).

11. A power consuming apparatus, **characterized by** comprising a battery according to claim 10 for supplying electric energy.

12. The power consuming apparatus according to claim 11, **characterized in that** the power consuming apparatus further comprises an air conditioner, with an air outlet of the air conditioner being connected to the first ventilation assembly (114a), and an air inlet of the air conditioner being connected to the second ventilation assembly (114b).

13. A method for manufacturing a battery, comprising:
providing (310) battery cells (20);
providing (320) a case (11), the case (11) being provided with at least two pressure balancing mechanisms (113), the pressure balancing mechanisms (113) being used to balance the pressure inside and outside the case (11), and the at least two pressure balancing mechanisms (113) being connected to a ventilation assembly (114) at an outer side of the case (11); and
placing (330) the battery cells (20) into the case (11),
wherein a first ventilation assembly (114a) connected to a first pressure balancing mechanism (113a) in the at least two pressure balancing mechanisms (113) is used to open the first pressure balancing mechanism (113a) to introduce air into the case (11), and a second ventilation assembly (114b) connected to a second pressure balancing mechanism (113b) in the at least two pressure balancing mechanisms (113) is used to open the second pressure balancing mechanism (113b) so that the air in the case (11) is discharged, the method being **characterized in that** the ventilation assembly (114) comprises:
a magnet (1142) for attracting a valve plate (1131) of the pressure balancing mechanism (113);
a driving mechanism (1143) connected to the magnet (1142), the driving mechanism (1143) being used to drive the magnet (1142) to move in a direction away from the case (11), so that the magnet (1142) attracts the valve plate (1131) of the pressure balancing mechanism in the direction away from the case (11) to open the pressure balancing mechanism (113); and
an air flow channel (1144), the air flow channel (1144) being in communication with the inside of the case (11) when the pressure balancing mechanism (113) is opened.

14. An apparatus for manufacturing a battery, comprising
a provision module (410) for providing battery cells (20) and a case (11),
the case (11) being provided with at least two pressure balancing mechanisms (113) used to balance the pressure inside and outside the case (11), the at least two pressure balancing mechanisms (113) being connected to a ventilation assembly (114) at an outer side of the case (11); and
an installation module (420) for placing the battery cells (20) into the case (11),
wherein a first ventilation assembly (114a) connected to a first pressure balancing mechanism (113a) in the at least two pressure balancing mechanisms (113) is used to open the first pressure balancing mechanism (113a) to introduce air into the case (11), and a second ventilation assembly (114b) connected to a second pressure balancing mechanism (113b) in the at least two pressure balancing mechanisms (113) is used to open the second pressure balancing mechanism (113b) so that the air in the case (11) is discharged, the apparatus being **characterized in that** the ventilation assembly (114) comprises:
a magnet (1142) for attracting a valve plate (1131) of the pressure balancing mechanism (113);
a driving mechanism (1143) connected to the magnet (1142), the driving mechanism (1143) being used to drive the magnet (1142) to move in a direction away from the case (11), so that the magnet (1142) attracts the valve plate (1131) of the pressure balancing mechanism in the direction away from the case (11) to open the pressure balancing mechanism (113); and
an air flow channel (1144), the air flow channel (1144) being in communication with the inside of the case (11) when the pressure balancing mechanism (113) is opened.

## Patentansprüche

1. Gehäuse (11) einer Batterie, wobei das Gehäuse (11) mit mindestens zwei Druckausgleichsmechanismen (113) versehen ist, wobei die Druckausgleichsmechanismen (113) verwendet werden, um den Druck innerhalb und außerhalb des Gehäuses (11) auszugleichen, und wobei die mindestens zwei Druckausgleichsmechanismen (113) mit einer Belüftungsanordnung (114) an einer äußeren Seite des Gehäuses (11) verbunden sind,
wobei eine erste Belüftungsanordnung (114a), die mit einem ersten Druckausgleichsmechanismus (113a) in den mindestens zwei Druckausgleichsmechanismen (113) verbunden ist, verwendet wird, um den ersten Druckausgleichsmechanismus (113a) zu öffnen, um Luft in das Gehäuse (11) einzuleiten, und eine zweite Belüftungsanordnung (114b), die mit einem zweiten Druckausgleichsmechanismus (113b) in den mindestens zwei Druckausgleichsmechanismen (113) verbunden ist, verwendet wird, um den zweiten Druckausgleichsmechanismus (113b) zu öffnen, so dass die Luft in dem Gehäuse (11) abgeleitet wird, wobei das Gehäuse **dadurch gekennzeichnet ist, dass** die Belüftungsanordnung (114) umfasst:
einen Magneten (1142) zum Anziehen einer Ventilplatte (1131) des Druckausgleichsmechanismus (113);
einen Antriebsmechanismus (1143), der mit dem Magneten (1142) verbunden ist, wobei der Antriebsmechanismus (1143) verwendet wird, um den Magneten (1142) so anzutreiben, dass er sich in einer Richtung weg vom Gehäuse (11) bewegt, so dass der Magnet (1142) die Ventilplatte (1131) des Druckausgleichsmechanismus in der Richtung weg vom Gehäuse (11) anzieht, um den Druckausgleichsmechanismus (113) zu öffnen; und
einen Luftströmungskanal (1144), wobei der Luftströmungskanal (1144) mit dem Inneren des Gehäuses (11) in Verbindung steht, wenn der Druckausgleichsmechanismus (113) geöffnet ist.

2. Gehäuse (11) nach Anspruch 1, wobei die erste Belüftungsanordnung (114a) konfiguriert ist, um mit einem Luftauslass einer Klimaanlage verbunden zu werden, und die zweite Belüftungsanordnung (114b) konfiguriert ist, um mit einem Lufteinlass der Klimaanlage verbunden zu werden, so dass die Luft in dem Gehäuse (11) in einen Luftstromkreislauf der Klimaanlage eintritt.

3. Gehäuse (11) nach Anspruch 1 oder 2, wobei der erste Druckausgleichsmechanismus (113a) und der zweite Druckausgleichsmechanismus (113b) jeweils an zwei gegenüberliegenden Wänden des Gehäuses (11) bereitgestellt sind.

4. Gehäuse (11) nach Anspruch 1, wobei der Antriebsmechanismus (1143) ein Drehantriebsmechanismus ist; wenn sich der Antriebsmechanismus (1143) in einer ersten Richtung dreht, treibt der Antriebsmechanismus (1143) den Magneten (1142) an, um sich in der Richtung weg von dem Gehäuse (11) zu bewegen; und wenn sich der Antriebsmechanismus (1143) in einer zweiten Richtung dreht, treibt der Antriebsmechanismus (1143) den Magneten (1142) an, um sich in einer Richtung nahe dem Gehäuse (11) zu bewegen.

5. Gehäuse (11) nach einem der vorstehenden Ansprüche, wobei die Belüftungsanordnung (114) ferner umfasst:
eine Fixierstruktur (1145), die konfiguriert ist, um mit dem Druckausgleichsmechanismus (113) in einer Richtung parallel zu der Ventilplatte (1131) des Druckausgleichsmechanismus (113) verbunden oder von diesem getrennt zu werden.

6. Gehäuse (11) nach Anspruch 5, wobei der Druckausgleichsmechanismus (113) mit einer Nut (1135) versehen ist, die der Fixierstruktur (1145) entspricht, und die Fixierstruktur (1145) in die Nut (1135) in der Richtung parallel zur Ventilplatte (1131) des Druckausgleichsmechanismus (113) eingerastet und dann mit dem Druckausgleichsmechanismus (113) verbunden ist.

7. Gehäuse (11) nach Anspruch 6, wobei die Fixierstruktur (1145) eine hohle halbzylindrische Form aufweist, die an den Druckausgleichsmechanismus (113) angepasst ist, um in die Nut (1135) in der Richtung parallel zur Ventilplatte (1131) des Druckausgleichsmechanismus (113) eingerastet werden zu können.

8. Gehäuse (11) nach einem der Ansprüche 5 bis 7, wobei, wenn die Fixierstruktur (1145) mit dem Druckausgleichsmechanismus (113) verbunden ist, sich der Antriebsmechanismus (1143) relativ zur Fixierstruktur (1145) bewegt, um den Magneten (1142) anzutreiben, sich in der Richtung weg vom Gehäuse (11) zu bewegen, um den Druckausgleichsmechanismus (113) zu öffnen.

9. Gehäuse (11) nach einem der Ansprüche 1 bis 8, **dadurch gekennzeichnet, dass** der Druckausgleichsmechanismus (113) ein Druckentlastungsmechanismus ist, der, wenn er nicht mit der Belüftungsanordnung (114) verbunden ist, verwendet wird, um den Innendruck des Gehäuses (11) abzulassen, wenn der Innendruck einen Schwellenwert erreicht.

10. Batterie, **dadurch gekennzeichnet, dass** sie umfasst:
Batteriezellen; und
ein Gehäuse (11) nach einem der Ansprüche 1 bis 9, wobei die Batteriezellen in dem Gehäuse (11) untergebracht sind.

11. Stromverbrauchende Vorrichtung, **dadurch gekennzeichnet, dass** sie eine Batterie nach Anspruch 10 zum Liefern elektrischer Energie umfasst.

12. Stromverbrauchende Vorrichtung nach Anspruch 11, **dadurch gekennzeichnet, dass** die stromverbrauchende Vorrichtung ferner eine Klimaanlage umfasst, wobei ein Luftauslass der Klimaanlage mit der ersten Belüftungsanordnung (114a) verbunden ist und ein Lufteinlass der Klimaanlage mit der zweiten Belüftungsanordnung (114b) verbunden ist.

13. Verfahren zum Herstellen einer Batterie, umfassend:
Bereitstellen (310) von Batteriezellen (20);
Bereitstellen (320) eines Gehäuse (11), wobei das Gehäuse (11) mit mindestens zwei Druckausgleichsmechanismen (113) versehen ist, wobei die Druckausgleichsmechanismen (113) verwendet werden, um den Druck innerhalb und außerhalb des Gehäuses (11) auszugleichen, und wobei die mindestens zwei Druckausgleichsmechanismen (113) mit einer Belüftungsanordnung (114) an einer äußeren Seite des Gehäuses (11) verbunden sind; und
Platzieren (330) der Batteriezellen (20) in dem Gehäuse (11),
wobei eine erste Belüftungsanordnung (114a), die mit einem ersten Druckausgleichsmechanismus (113a) in den mindestens zwei Druckausgleichsmechanismen (113) verbunden ist, verwendet wird, um den ersten Druckausgleichsmechanismus (113a) zu öffnen, um Luft in das Gehäuse (11) einzuleiten, und eine zweite Belüftungsanordnung (114b), die mit einem zweiten Druckausgleichsmechanismus (113b) in den mindestens zwei Druckausgleichsmechanismen (113) verbunden ist, verwendet wird, um den zweiten Druckausgleichsmechanismus (113b) zu öffnen, so dass die Luft in dem Gehäuse (11) abgeleitet wird, wobei das Verfahren **dadurch gekennzeichnet ist, dass** die Belüftungsanordnung (114) umfasst:
einen Magneten (1142) zum Anziehen einer Ventilplatte (1131) des Druckausgleichsmechanismus (113);
einen Antriebsmechanismus (1143), der mit dem Magneten (1142) verbunden ist, wobei der Antriebsmechanismus (1143) verwendet wird, um den Magneten (1142) so anzutreiben, dass er sich in einer Richtung weg vom Gehäuse (11) bewegt, so dass der Magnet (1142) die Ventilplatte (1131) des Druckausgleichsmechanismus in der Richtung weg vom Gehäuse (11) anzieht, um den Druckausgleichsmechanismus (113) zu öffnen; und
einen Luftströmungskanal (1144), wobei der Luftströmungskanal (1144) mit dem Inneren des Gehäuses (11) in Verbindung steht, wenn der Druckausgleichsmechanismus (113) geöffnet ist.

14. Vorrichtung zum Herstellen einer Batterie, umfassend:
ein Bereitstellungsmodul (410) zum Bereitstellen von Batteriezellen (20) und eines Gehäuses (11), wobei das Gehäuse (11) mit mindestens zwei Druckausgleichsmechanismen (113) versehen ist, die verwendet werden, um den Druck innerhalb und außerhalb des Gehäuses (11) auszugleichen, wobei die mindestens zwei Druckausgleichsmechanismen (113) mit einer Belüftungsanordnung (114) an einer äußeren Seite des Gehäuses (11) verbunden sind; und
ein Installationsmodul (420) zum Platzieren der Batteriezellen (20) in dem Gehäuse (11), wobei eine erste Belüftungsanordnung (114a), die mit einem ersten Druckausgleichsmechanismus (113a) in den mindestens zwei Druckausgleichsmechanismen (113) verbunden ist, verwendet wird, um den ersten Druckausgleichsmechanismus (113a) zu öffnen, um Luft in das Gehäuse (11) einzuleiten, und eine zweite Belüftungsanordnung (114b), die mit einem zweiten Druckausgleichsmechanismus (113b) in den mindestens zwei Druckausgleichsmechanismen (113) verbunden ist, verwendet wird, um den zweiten Druckausgleichsmechanismus (113b) zu öffnen, so dass die Luft in dem Gehäuse (11) abgeleitet wird, wobei die Vorrichtung **dadurch gekennzeichnet ist, dass** die Belüftungsanordnung (114) umfasst:
einen Magneten (1142) zum Anziehen einer Ventilplatte (1131) des Druckausgleichsmechanismus (113);
einen Antriebsmechanismus (1143), der mit dem Magneten (1142) verbunden ist, wobei der Antriebsmechanismus (1143) verwendet wird, um den Magneten (1142) so anzutreiben, dass er sich in einer Richtung weg vom Gehäuse (11) bewegt, so dass der Magnet (1142) die Ventilplatte (1131) des Druckausgleichsmechanismus in der Richtung weg vom Gehäuse (11) anzieht, um den Druckausgleichsmechanismus (113) zu öffnen; und
einen Luftströmungskanal (1144), wobei der Luftströmungskanal (1144) mit dem Inneren des Gehäuses (11) in Verbindung steht, wenn der Druckausgleichsmechanismus (113) geöffnet ist.

## Revendications

1. Boîtier (11) de batterie, le boîtier (11) étant pourvu d'au moins deux mécanismes d'équilibrage de pression (113), les mécanismes d'équilibrage de pression (113) étant utilisés pour équilibrer la pression à l'intérieur et à l'extérieur du boîtier (11), et les au moins deux mécanismes d'équilibrage de pression (113) étant reliés à un ensemble de ventilation (114) au niveau d'un côté externe du boîtier (11),
dans lequel un premier ensemble de ventilation (114a) raccordé à un premier mécanisme d'équilibrage de pression (113a) dans les au moins deux mécanismes d'équilibrage de pression (113) est utilisé pour ouvrir le premier mécanisme d'équilibrage de pression (113a) pour introduire de l'air dans le boîtier (11), et un deuxième ensemble de ventilation (114b) raccordé à un deuxième mécanisme d'équilibrage de pression (113b) dans les au moins deux mécanismes d'équilibrage de pression (113) est utilisé pour ouvrir le deuxième mécanisme d'équilibrage de pression (113b) de telle sorte que de l'air dans le boîtier (11) soit évacué, le boîtier étant **caractérisé en ce que** l'ensemble de ventilation (114) comprend :
un aimant (1142) destiné à attirer une plaque de soupape (1131) du mécanisme d'équilibrage de pression (113) ;
un mécanisme d'entraînement (1143) raccordé à l'aimant (1142), le mécanisme d'entraînement (1143) étant utilisé pour amener l'aimant (1142) à bouger dans une direction qui s'éloigne du boîtier (11), de telle sorte que l'aimant (1142) attire la plaque de soupape (1131) du mécanisme d'équilibrage de pression dans la direction qui s'éloigne du boîtier (11) pour ouvrir le mécanisme d'équilibrage de pression (113) ; et
un canal d'écoulement d'air (1144), le canal d'écoulement d'air (1144) étant en communication avec l'intérieur du boîtier (11) quand le mécanisme d'équilibrage de pression (113) est ouvert.

2. Boîtier (11) selon la revendication 1, dans lequel le premier ensemble de ventilation (114a) est conçu pour être raccordé à une sortie d'air d'un conditionneur d'air, et le deuxième ensemble de ventilation (114b) est conçu pour être raccordé à une entrée d'air du conditionneur d'air, de telle sorte que l'air dans le boîtier (11) entre dans une circulation de flux d'air du conditionneur d'air.

3. Boîtier (11) selon la revendication 1 ou 2, dans lequel le premier mécanisme d'équilibrage de pression (113a) et le deuxième mécanisme d'équilibrage de pression (113b) sont respectivement fournis sur deux parois opposées du boîtier (11).

4. Boîtier (11) selon la revendication 1, dans lequel le mécanisme d'entraînement (1143) est un mécanisme d'entraînement rotatif ; quand le mécanisme d'entraînement (1143) tourne dans une première direction, le mécanisme d'entraînement (1143) amène l'aimant (1142) à se déplacer dans la direction qui s'éloigne du boîtier (11) ; et quand le mécanisme d'entraînement (1143) tourne dans une deuxième direction, le mécanisme d'entraînement (1143) amène l'aimant (1142) à se déplacer dans une direction proche du boîtier (11).

5. Boîtier (11) selon l'une quelconque des revendications précédentes, dans lequel l'ensemble de ventilation (114) comprend en outre :
une structure de fixation (1145) conçue pour être raccordée au ou séparée du mécanisme d'équilibrage de pression (113) dans une direction parallèle à la plaque de soupape (1131) du mécanisme d'équilibrage de pression (113).

6. Boîtier (11) selon la revendication 5, dans lequel le mécanisme d'équilibrage de pression (113) est pourvu d'une rainure (1135) correspondant à la structure de fixation (1145), et la structure de fixation (1145) est encliquetée dans la rainure (1135) dans la direction parallèle à la plaque de soupape (1131) du mécanisme d'équilibrage de pression (113) puis raccordée au mécanisme d'équilibrage de pression (113).

7. Boîtier (11) selon la revendication 6, dans lequel la structure de fixation (1145) est d'une forme semi-cylindrique creuse adaptée au mécanisme d'équilibrage de pression (113) de sorte à pouvoir être encliquetée dans la rainure (1135) dans la direction parallèle à la plaque de soupape (1131) du mécanisme d'équilibrage de pression (113).

8. Boîtier (11) selon l'une quelconque des revendications 5 à 7, dans lequel quand la structure de fixation (1145) est raccordée au mécanisme d'équilibrage de pression (113), le mécanisme d'entraînement (1143) se déplace par rapport à la structure de fixation (1145) pour amener l'aimant (1142) à se déplacer dans la direction qui s'éloigne du boîtier (11) pour ouvrir le mécanisme d'équilibrage de pression (113).

9. Boîtier (11) selon l'une quelconque des revendications 1 à 8, **caractérisé en ce que** le mécanisme d'équilibrage de pression (113) est un mécanisme de libération de pression qui est utilisé, quand il n'est pas raccordé à l'ensemble de ventilation (114), pour être actionné afin de libérer la pression interne du boîtier (11) quand la pression interne atteint un seuil.

10. Batterie, **caractérisée en ce qu'**elle comprend :
des cellules de batterie ; et
un boîtier (11) selon l'une quelconque des revendications 1 à 9, les cellules de batterie étant reçues dans le boîtier (11).

11. Appareil de consommation d'énergie, **caractérisé en ce qu'**il comprend une batterie selon la revendication 10 destinée à fournir de l'énergie électrique.

12. Appareil de consommation d'énergie selon la revendication 11, **caractérisé en ce qu'**il comprend en outre un conditionneur d'air, une sortie d'air du conditionneur d'air étant raccordée au premier ensemble de ventilation (114a), et une entrée d'air du conditionneur d'air étant raccordée au deuxième ensemble de ventilation (114b).

13. Procédé de fabrication d'une batterie, comprenant les étapes consistant à :
fournir (310) des cellules de batterie (20) ;
fournir (320) un boîtier (11), le boîtier (11) étant pourvu d'au moins deux mécanismes d'équilibrage de pression (113), les mécanismes d'équilibrage de pression (113) étant utilisés pour équilibrer la pression à l'intérieur et à l'extérieur du boîtier (11), et les au moins deux mécanismes d'équilibrage de pression (113) étant reliés à un ensemble de ventilation (114) au niveau d'un côté externe du boîtier (11) ; et
placer (330) les cellules de batterie (20) dans le boîtier (11),
dans lequel un premier ensemble de ventilation (114a) raccordé à un premier mécanisme d'équilibrage de pression (113a) dans les au moins deux mécanismes d'équilibrage de pression (113) est utilisé pour ouvrir le premier mécanisme d'équilibrage de pression (113a) pour introduire de l'air dans le boîtier (11), et un deuxième ensemble de ventilation (114b) raccordé à un deuxième mécanisme d'équilibrage de pression (113b) dans les au moins deux mécanismes d'équilibrage de pression (113) est utilisé pour ouvrir le deuxième mécanisme d'équilibrage de pression (113b) de telle sorte que l'air dans le boîtier (11) soit évacué, le procédé étant **caractérisé en ce que** l'ensemble de ventilation (114) comprend :
un aimant (1142) destiné à attirer une plaque de soupape (1131) du mécanisme d'équilibrage de pression (113) ;
un mécanisme d'entraînement (1143) raccordé à l'aimant (1142), le mécanisme d'entraînement (1143) étant utilisé pour amener l'aimant (1142) à bouger dans une direction qui s'éloigne du boîtier (11), de telle sorte que l'aimant (1142) attire la plaque de soupape (1131) du mécanisme d'équilibrage de pression dans la direction qui s'éloigne du boîtier (11) pour ouvrir le mécanisme d'équilibrage de pression (113) ; et
un canal d'écoulement d'air (1144), le canal d'écoulement d'air (1144) étant en communication avec l'intérieur du boîtier (11) quand le mécanisme d'équilibrage de pression (113) est ouvert.

14. Appareil destiné à la fabrication d'une batterie, comprenant
un module de fourniture (410) destiné à fournir des cellules de batterie (20) et un boîtier (11),
le boîtier (11) étant pourvu d'au moins deux mécanismes d'équilibrage de pression (113) utilisés pour équilibrer la pression à l'intérieur et à l'extérieur du boîtier (11), les au moins deux mécanismes d'équilibrage de pression (113) étant reliés à un ensemble de ventilation (114) au niveau d'un côté externe du boîtier (11) ; et
un module d'installation (420) destiné à placer les cellules de batterie (20) dans le boîtier (11),
dans lequel un premier ensemble de ventilation (114a) raccordé à un premier mécanisme d'équilibrage de pression (113a) dans les au moins deux mécanismes d'équilibrage de pression (113) est utilisé pour ouvrir le premier mécanisme d'équilibrage de pression (113a) pour introduire de l'air dans le boîtier (11), et un deuxième ensemble de ventilation (114b) raccordé à un deuxième mécanisme d'équilibrage de pression (113b) dans les au moins deux mécanismes d'équilibrage de pression (113) est utilisé pour ouvrir le deuxième mécanisme d'équilibrage de pression (113b) de telle sorte que l'air dans le boîtier (11) soit évacué, l'appareil étant **caractérisé en ce que** l'ensemble de ventilation (114) comprend :
un aimant (1142) destiné à attirer une plaque de soupape (1131) du mécanisme d'équilibrage de pression (113) ;
un mécanisme d'entraînement (1143) raccordé à l'aimant (1142), le mécanisme d'entraînement (1143) étant utilisé pour amener l'aimant (1142) à bouger dans une direction qui s'éloigne du boîtier (11), de telle sorte que l'aimant (1142) attire la plaque de soupape (1131) du mécanisme d'équilibrage de pression dans la direction qui s'éloigne du boîtier (11) pour ouvrir le mécanisme d'équilibrage de pression (113) ; et
un canal d'écoulement d'air (1144), le canal d'écoulement d'air (1144) étant en communication avec l'intérieur du boîtier (11) quand le mécanisme d'équilibrage de pression (113) est ouvert.
